# EUROPÄISCHE PATENTSCHRIFT

(11) **EP 1 460 322 B1**
(45) Veröffentlichungstag und Bekanntmachung des Hinweises auf die Patenterteilung: **05.05.2010**
(21) Anmeldenummer: 04005931.3
(22) Anmeldetag: 12.03.2004
(51) Int. Cl.: F16L 3/08

(54) **Befestigungsvorrichtung für langgestreckte, flache Gegenstände, insbesondere Flachbandleitungen**
Fixing device for flat, elongated elements, in particular for flat cables
Dispositif de fixation d'éléments allongés et plats, notamment de câbles-ruban

(30) Priorität: 18.03.2003 DE 10312015
(43) Veröffentlichungstag der Anmeldung: 22.09.2004
(73) Patentinhaber: Newfrey LLC, Newark, Delaware 19711 (US)
(72) Erfinder: Stigler, Mario, 35641 Schöffengrund (DE); Wolfgang, Werner, 72766 Reutlingen (DE); Nitsch, Jürgen, 73663 Berglen (DE); Hahn, Ernst-Ludwig, 35466 Rabenau (DE)
(74) Vertreter: Haar, Lucas Heinz Jörn

(56) Entgegenhaltungen:
- PATENT ABSTRACTS OF JAPAN Bd. 1999, Nr. 09, 30. Juli 1999 (1999-07-30) -& JP 11 122759 A (FUJIKURA LTD), 30. April 1999 (1999-04-30)

## Beschreibung

Die Erfindung betrifft eine Vorrichtung zum Befestigen von langgestreckten, flachen Gegenständen, insbesondere Flachbandleitungen, an einer Unterlage mit einem Halter, der einen Haltebereich mit Mitteln zum Festhalten wenigstens eines langgestreckten, flachen Gegenstands und einen Befestigungsbereich aufweist, der zum Befestigen des Halters bestimmt ist.

Vorrichtungen der angegebenen Art werden zur Befestigung von elektrischen Flachbandleitungen beispielsweise an Karosserieteilen von Automobilen verwendet. Bei solchen Flachbandleitungen, auch Folienleiter oder Flachbandkabel genannt, sind eine Anzahl von Leiterbahnen nebeneinander auf einer dünnen, elektrisch isolierenden Trägerschicht aufgebracht und mit einer elektrisch isolierenden Deckschicht abgedeckt. Andere Ausführungen von Flachbandleitungen bestehen aus einer Mehrzahl von Leitern, die parallel zueinander angeordnet und von einem Isolator bedeckt sind, wobei sich zwischen benachbarten Leitern Verbindungsabschnitte des Isolators erstrecken. Bei der Verlegung von Flachbandleitungen ist es erforderlich, diese in Abständen an einer Unterlage zu befestigen.

Aus JP-A-11122759 ist eine Vorrichtung gemäß dem Oberbegriff des Anspruchs 1 bekannt, welche aus einem zweiteiligen Halter besteht, der mit Hilfe eines Sockels an einer Unterlage befestigt werden kann. Ein Teil des Halters weist an seiner Befestigungsseite zwei parallele Leisten auf, die auf ihren einander zugekehrten Seiten Nuten haben. Zur Verbindung mit dem Halter ist der Sockel längs der Leisten in den Zwischenraum zwischen den Leisten einschiebbar, wobei auf entgegengesetzten Seiten des Sockels angeordnete Rippen in die Nuten eingreifen. Das Verbinden von Halter und Sockel ist hierbei umständlich, weil die Rippen an den Enden der Leisten in die Nuten eingefädelt werden müssen.

Aus DE 101 29 833 A1 ist eine Klemme zum Halten eines Flachbandkabels bekannt, die ein U-förmiges Basisteil zum Aufnehmen des Flachbandkabels, ein mit dem Basisteil verbundenes Abdeckteil, einen sich von dem Basisteil erstreckenden Vorsprung und ein Andrückteil umfaßt, das an dem Abdeckteil angeordnet ist und das von dem Basisteil aufgenommene Flachbandkabel nach unten hält, wenn das Abdeckteil geschlossen ist. In dem Flachbandkabel ist ein Schlitz vorgesehen, in den der Vorsprung eindringt. Auf der Unterseite des Basisteils befindet sich ein Clip, der in ein Loch einer Automobilkarosserie einzusetzen ist, um das Flachbandkabel dort anzubringen.

Bei einer aus DE 100 51 120 A1 bekannten Vorrichtung zur Befestigung von Flachbandkabeln an einer Trägerplatte ragen von einer Grundplatte zwei elastisch spreizbare Fortsätze ab, deren Enden durch einen dreiteiligen Steg verbunden sind, dessen Gesamtlänge größer ist als der Abstand zwischen den beiden Fortsätzen und dessen drei Teile untereinander und mit den Enden der Fortsätze scharnierartig verbunden sind. Die Grundplatte wird auf das an der Trägerplatte zu befestigende Flachbandkabel aufgesetzt und durch Niederdrücken des mittleren Teils des Steges werden die spreizbaren Fortsätze an auf der Trägerplatte angeordnete und durch Eingriffslöcher in der Grundplatte hindurchragende Bolzen angedrückt und dadurch an der Grundplatte in dieser Lage fixiert.

Mit den bekannten Befestigungsvorrichtungen können auch mehrere Flachbandkabel übereinanderliegend befestigt werden. Da hierbei die Haltevorrichtung erst geschlossen werden kann, nachdem alle zu befestigenden Leitungen in sie eingelegt sind, müssen bei ungünstigen Einbaulagen, beispielsweise bei Überkopfanordnung besondere Hilfsmittel eingesetzt werden, um die unteren Lagen der Flachbandleitungen so lange zu halten, bis nach einlegen der obersten Lage die Vorrichtung geschlossen werden kann.

Aus DE 100 45 765 D1 ist eine Umlenkvorrichtung für einen Folienleiter bekannt, die eine Umlenkklappe mit einer Umlenkkante und einer Schutzkante aufweist. Im Montagezustand ist der Folienleiter zwischen einer Grundklappe und der Umlenkklappe einerseits und zwischen der Umlenkkante und der Schutzkante andererseits eingeklemmt. Die Umlenkvorrichtung ermöglicht ein Umlenken des Folienleiters beispielsweise um 90° und dient gleichzeitig zu seiner Befestigung an einer Unterlage. Hierzu weist die Umlenkvorrichtung an der Montageunterseite Befestigungselemente auf, die zum Einrasten in eine Öffnung eines Trägerteils bestimmt sind.

Der Erfindung liegt die Aufgabe zugrunde, eine Vorrichtung zum Befestigen von langgestreckten, flachen Gegenständen, insbesondere Flachbandleitungen der eingangs genannten Art zu schaffen, die besonders einfach zu montieren und zu handhaben ist.

Diese Aufgabe wird durch die im Patentanspruch 1 angegebene Erfindung gelöst. Vorteilhafte Ausgestaltungen der Erfindung sind in den Unteransprüchen angegeben.

Nach der Erfindung weist die Vorrichtung einen Sockel auf, der getrennt von dem Halter an einer Unterlage beispielsweise an einer Automobilkarosserie, befestigbar ist, wobei an dem Sockel und an dem Befestigungsbereich des Halters einander zugeordnete Kupplungselemente vorgesehen sind, die zum Verbinden des Halters mit dem Sockel in eine Eingrifflage gebracht werden können, in welcher der Halter mit Hilfe der Kupplungselemente an dem Sockel festgehalten ist, wobei der Sockel eine Ausnehmung zur Aufnahme wenigstens eines Befestigungsbereichs des Halters aufweist und der Halter mit seinem Befestigungsbereich auf der der Unterlage abgekehrten Seite des Sockels mit einer zur Unterlage hin gerichteten ersten Bewegung in die Ausnehmung des Sockels eingesetzt und dann durch eine quer zu dieser ersten Bewegung verlaufende zweite Bewegung in eine Eingriffslage gebracht, in welcher der Halter formschlüssig an dem Sockel befestigt ist.

Bei der erfindungsgemäßen Vorrichtung sind die Mittel, die mit der Flachbandleitung verbunden werden, nämlich der Halter, und die Mittel, die zur Befestigung an der Unterlage dienen, nämlich der Sockel, voneinander getrennt und können durch eine einfache, von Hand zu bedienende Kupplung fest miteinander verbunden werden. Hierdurch ist es möglich, die zum Verlegen von Flachbandleitungen erforderlichen Vorgänge, nämlich das Anbringen der Flachbandleitung an der Befestigungsvorrichtung einerseits und das Anbringen der Befestigungsvorrichtung an der Unterlage andererseits zeitlich und räumlich getrennt voneinander durchzuführen, um dann anschließend mit einem besonders einfachen Montagevorgang durch Zusammenfügen der Kupplungselemente die Flachbandleitung zu verlegen. Der Bewegungsablauf zum Verbinden von Halter und Sockel ist für das Verlegen von Flachbandleitungen besonders günstig und ermöglicht eine einfache und leicht zu handhabende Gestaltung der Kupplungselemente. Die Trennung der Montagevorgänge erweitert die Möglichkeiten zu ihrer Durchführung und erleichtert den Einsatz von Montagerobotern.

Ein weiterer Vorteil der erfindungsgemäßen Vorrichtung besteht darin, daß für die Befestigung des Sockels an der Unterlage unterschiedliche Befestigungsmittel wie Bolzen, Schrauben, Nieten, Rastelemente oder Klebeverbindungen verwendet werden können, ohne daß diese Montageverfahren durch die vorherige Anbringung der Flachbandleitung behindert oder beeinträchtigt werden oder die Gefahr besteht, daß bei diesen Montagen die Flachbandleitung beschädigt wird.

Der Sockel weist in einer bevorzugten Ausgestaltung an wenigstens zwei gegenüberliegenden Seiten der Ausnehmung Kupplungselemente bildende Nuten und/oder Vorsprünge und der Befestigungsbereich des Halters mit den Nuten des Sockels zusammenwirkende Vorsprünge und/oder mit den Vorsprüngen des Sockels zusammenwirkende Nuten auf. Diese Gestaltung der Kupplungselemente ist einfach herstellbar und ermöglicht einfache Bewegungsabläufe bei der Montage.

Vorzugsweise sind zueinander parallele Nuten in gegenüberliegenden Seitenwänden der Ausnehmung des Sockels ausgebildet und mit wenigstens einem offenen Ende versehen, wobei der Befestigungsbereich des Halters Vorsprünge hat, die in die Nuten eingreifen, wenn der Halter mit dem Sockel verbunden ist.

Für einen solchen Bewegungsablauf ist es zweckmäßig, wenn die Nuten eine seitliche Aussparung haben und die Vorsprünge des Halters in der mit dem Sockel verbundenen Eingriffslage an den seitlichen Aussparungen der Nuten angeordnet und dort abgestützt sind. Mit dieser Gestaltung wird mit einfachen Mitteln eine formschlüssige Verriegelung zwischen Halter und Sockel in der Eingriffslage und eine wirksame Abstützung der Haltekräfte erreicht. Die Fixierung des Befestigungsbereichs des Halters in der Eingriffslage kann vorteilhaft durch ein Schnappgesperre erfolgen, das einschnappt, sobald die Vorsprünge des Halters sich in der Eingriffslage an den seitlichen Aussparungen befinden.

Besonders vorteilhaft ist eine weitere Ausgestaltung der Erfindung, bei der die Ausnehmung des Sockels zwei oder mehr Abschnitte aufweist, die in parallelen Ebenen übereinander liegen, wobei jeder Abschnitt zur Aufnahme eines in seiner Größe dem jeweiligen Abschnitt angepaßten Befestigungsbereichs eines Halters ausgebildet ist. Die Anschnitte können durch eine mehrstufige Ausbildung zweier gegenüber liegender Seitenwände der Ausnehmung voneinander abgesetzt sein. Durch diese Gestaltung ist es möglich übereinander liegend mehrere Halter an ein und demselben Sockel zu befestigen, wobei jeder Halter wenigstens eine Flachbandleitung tragen kann. Hierdurch können mehrere Flachbandleitungen übereinander liegend gehalten werden, wobei die Montage der einzelnen Leitungen unabhängig voneinander erfolgen kann und jede Leitung getrennt von den anderen mit ihrem Halter an dem Sockel befestigt ist. Zusätzliche Hilfsmittel zum Halten einzelner Leitungen während der Montage sind nicht erforderlich.

Zu seiner Befestigung an der Unterlage kann der Sockel eine Öffnung zur Aufnahme eines von der Unterlage abstehenden Befestigungsbolzens mit Hinterschnitt und den Hinterschnitt des Befestigungsbolzens eingreifende Haltemittel haben. In einer anderen Ausgestaltung kann der Sockel an seiner der Unterlage zugewandten Unterseite mit einem in eine Offnung der Unterlage einsteckbaren Zapfen mit die Öffnung hintergreifenden Haltemitteln versehen sein.

Eine bevorzugte Ausgestaltung des Halters umfaßt ein im wesentlichen plattenformiges Basisteil, das in nebeneinander liegender Anordnung den Haltebereich und den Befestigungsbereich bildet, wobei der Haltebereich eine Auflagefläche für einen langgestreckten, flachen Gegenstand, beiderseits der Auflageflache in Bezug auf diese erhabene Führungselemente und eine an dem Basisteil schwenkbar befestigte Klappe aufweist, die in einer an dem Basisteil festhaltbaren Verriegelungsstellung den auf der Anlagefläche angeordneten Gegenstand übergreift. Der Befestigungsbereich des Halters weist vorzugsweise an seinen gegenüber liegenden, an den Halterbereich angrenzenden Seiten zwei in einem Abstand voneinander angeordnete Vorsprünge auf, die zum Eingreifen in Nuten des Sockels bestimmt sind, und ist an seiner dem Haltebereich entgegen gesetzten Seite mit einer von dem Basisteil abstehenden, federnden Zunge versehen, die an ihrem freien Ende einen mit dem Sockel zusammenwirkenden Rasthaken trägt. Der Befestigungsbereich des Halters kann außerdem mit einer zentralen Öffnung versehen sein Durch diese Offnung wird ein bei der Anordnung des Halters im Sockel verfugbarer Freiraum geschaffen, der zur Anordnung eines der Befestigung des Sockels dienenden Mittels, beispielsweise eines Bolzens oder einer Schraube genutzt werden kann.

Die Klappe kann erfindungsgemäß mit dem Halter durch ein Filmscharnier verbunden sein. Eine andere vorteilhafte Ausgestaltung sieht vor, daß die Klappe zylindrische Lagerzapfen aufweist, die in eine teilzylindrische Lagerausnehmung in dem Halter einknöpfbar sind Hierbei ist es besonders vorteilhaft, wenn die Klappe vollkommen symmetrisch ausgebildet ist, so daß der Aufwand zur Positionierung der Klappe bei ihrer Montage minimal ist. Zur Verriegelung der Klappe in der Schließstellung kann an dem Halter oder an der Klappe ein Schnapphaken angebracht sein, der mit einem Vorsprung an der Klappe beziehungsweise an dem Halter zusammen wirkt Es ist auch von Vorteil, wenn die Klappe an der Scharnierseite Vorsprünge hat, die in der Schließstellung der Klappe in eine Ausnehmung des Halters eingreifen und die Klappe an dem Scharnier zusätzlich gegen Losen sichern

Um den zwischen der Anlagefläche des Halters und der Klappe angeordneten, langgestreckten flachen Gegenstand mit einer definierten Kraft festzuspannen und an einer Verschiebung in Längsrichtung zu hindern, kann an der Klappe und/oder in der Anlagefläche des Halters eine erhabene Rippe aus einem weichelastischen Material vorgesehen sein. Vorzugsweise besteht die Rippe aus einem Einsatz, der in einen Schlitz des Halters beziehungsweise der Klappe eingesetzt ist Bei der Herstellung der Teile aus thermoplastischem Kunststoff ist es vorteilhaft, wenn die Rippe im Zweikomponenten-Spritzgießverfahren gemeinsam mit dem Halter beziehungsweise mit der Klappe hergestellt wird.

Die erfindungsgemäße Vorrichtung eignet sich auch zum Umlenken von Flachbandleitungen, wenn die Klappe eine seitliche Umlenkkante aufweist, die in einem dem Umlenkwinkel entsprechenden Winkel zur Längsrichtung der Flachbandleitung verläuft. Zur Umlenkung wird die Flachbandleitung nach dem Schließen der Klappe um die Umlenkkante der Klappe herum gefaltet.

Die Erfindung wird nachfolgend anhand von Ausführungsbeispielen näher erläutert, die in der Zeichnung dargestellt sind. Es zeigen
- Figur 1: eine perspektivische Darstellung einer Vorrichtung zum Halten dreier Flachbandleitungen,
- Figur 2: eine Seitenansicht eines Halters der Vorrichtung gemäß Figur 1,
- Figur 3: eine Draufsicht des Halters der Vorrichtung gemäß Figur 1,
- Figur 4: eine zum Umlenken einer Flachbandleitung geeignete Ausführung eines Halters,
- Figur 5: eine zweiteilige Ausführung eines Halters der erfindungsgemäßen Vorrichtung,
- Figur 6: eine zweiteilige Ausführung eines Halters der erfindungsgemäßen Vorrichtung mit symmetrischer Klappe,
- Figur 7: ein Querschnitt des Halters gemäß Figur 6 entlang der Linie VII - VII,
- Figur 8: eine perspektivische Darstellung des Halters gemäß Figur 6,
- Figur 9: eine Draufsicht einer Ausführungsform des Sockels der Vorrichtung gemäß Figur 1,
- Figur 10: eine Rückansicht des Sockels gemäß Figur 9,
- Figur 11: eine Vorderansicht des Sockels gemäß Figur 9,
- Figur 12: eine Ansicht des Sockels gemäß Figur 9 von unten,
- Figur 13: eine Draufsicht der Vorrichtung gemäß Figur 1,
- Figur 14: einen Längsschnitt der Vorrichtung gemäß Figur 1 entlang der Linie A - A in Figur 13,
- Figur 15: einen Querschnitt der Vorrichtung gemäß Figur 1 entlang der Linie B - B in Figur 13 und
- Figur 16: eine perspektivische Darstellung der mit zwei Haltern bestückten Vorrichtung gemäß Figur 1.

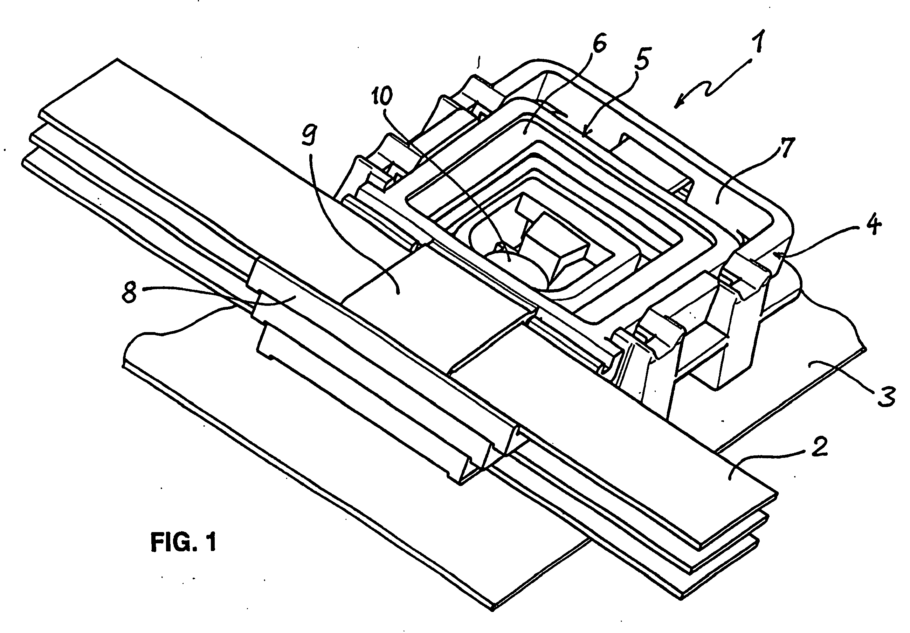

Figur 1 zeigt eine Befestigungsvorrichtung 1, die zum Befestigen von mehreren Flachbandleitungen 2 an einer Unterlage 3, beispielsweise der Karosserie eines Automobils bestimmt ist. Die Befestigungsvorrichtung 1 umfaßt einen Sockel 4 und mehrere Halter 5, die übereinander angeordnet und mit ihren Befestigungsbereichen 6 in einer zentralen Ausnehmung 7 des Sockels 4 befestigt sind. Jeder Halter 5 hat einen sich außerhalb des Sockels 4 erstreckenden Haltebereich 8, an dem die Flachbandleitung 2 mittels einer verschließbaren Klappe 9 festgehalten ist. Der Sockel 4 ist an der Unterlage 3 mit Hilfe eines T-Bolzens 10 befestigt, der in eine Öffnung des Sockels 4 eingeknöpft ist.

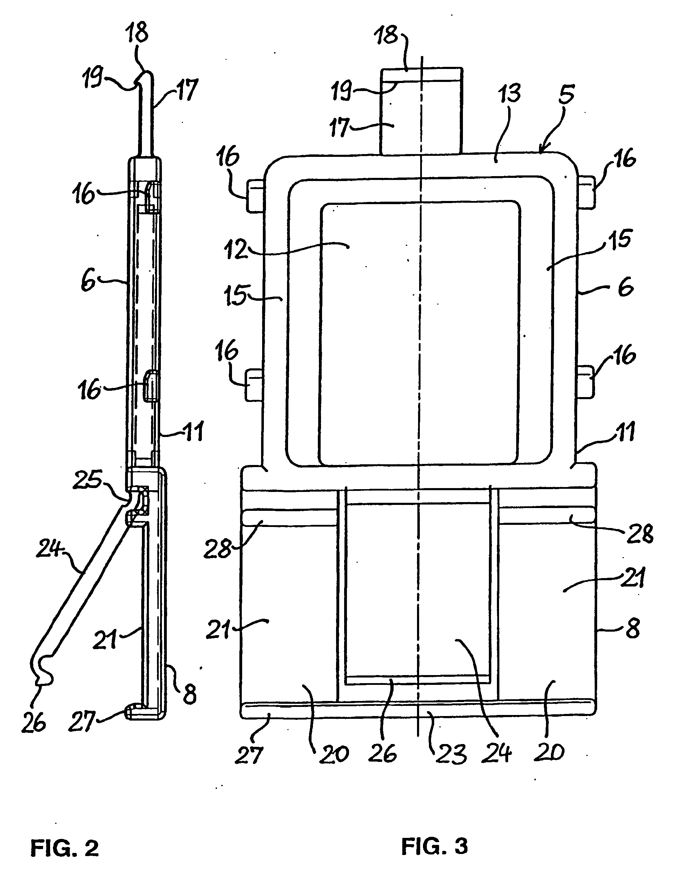

Wie aus den Figuren 2 und 3 zu ersehen, hat der Halter 5 ein Basisteil 11 in Form einer im wesentlichen ebenen Platte, die in einen rechteckigen Haltebereich 8 und einen Befestigungsbereich 6 gegliedert ist Der Befestigungsbereich 6 hat die Form eines Rahmens mit einer zentralen Öffnung 12, zwei kürzeren Rahmenschenkeln 13, 14 und zwei längeren Rahmenschenkeln 15 Die beiden längeren Rahmenschenkel 15 tragen in symmetrischer Anordnung auf ihrer Außenseite jeweils zwei noppenartige Vorsprunge 16, die zur Abstutzung des Halters 5 an dem Sockel 4 dienen Der kürzere Rahmenschenkel 13, der von dem Befestigungsbereich 6 weiter entfernt ist, weist auf seiner Außenseite eine sich parallel zur Rahmenebene erstreckende federnde Zunge 17 auf, die an ihrem freien Ende einen Schnapphaken 18 trägt, wobei die Sperrfläche 19 des Schnapphakens 18 dem Rahmenschenkel 13 zugewandt ist

An den kürzeren Rahmenschenkel 14 des Befestigungsbereichs 6 schließt sich der Haltebereich 8 an, der in Verlängerung der Rahmenschenkel 15 zwei Schenkel 20 mit in einer gemeinsamen Ebene liegenden Anlageflächen 21 aufweist. Die Schenkel 20 sind durch eine Öffnung 22 voneinander getrennt und ihre dem Rahmenschenkel 14 entgegengesetzte Enden sind durch einen Schenkel 23 miteinander verbunden. Über der Öffnung 22 befindet sich eine Klappe 24, die mit Hilfe eines Biegescharniers 25 schwenkbar an dem Schenkel 14 befestigt ist. Die Öffnung 22 ist vorgesehen, um den Halter in einem einfachen Formwerkzeug, welches keinen Schieber aufweist, herstellen zu können Das freie Ende der Klappe 24 ist mit einer Schnappnase 26 versehen, die zur Arretierung der Klappe 24 in der Schließstellung einen der Öffnung 22 zugekehrten Abschnitt des Schenkels 23 untergreift. Der Schenkel 23 bildet mit sich entlang der Anlageflächen 21 erstreckenden Verlangerungen eine durchgehende Rippe 27, die von den Anlageflächen 21 absteht und eine seitliche Anlage zur Führung und Abstützung einer auf den Anlageflächen 21 angeordneten Flachbandleitung bildet. In einem Abstand von der Rippe 27 und parallel zu dieser sind an den Schenkeln 20, Rippen 28 vorgesehen, die ebenfalls von der jeweiligen Anlagefläche 21 abstehen und eine der Rippe 27 gegenüberliegende seitliche Anlage fur die Flachbandleitung bilden.

Um eine Flachbandleitung an dem Halter 5 zu befestigen, wird diese bei geöffneter Klappe 24 auf die Anlageflächen 21 aufgelegt. Anschließend wird die Klappe 24 geschlossen und mit Hilfe der Rastnase 26 an dem Schenkel 23 fixiert. Die Flachbandleitung wird auf diese Weise vollständig von dem Haltebereich 8 des Halters 5 umgriffen und dadurch zuverlässig mit dem Halter 5 verbunden.

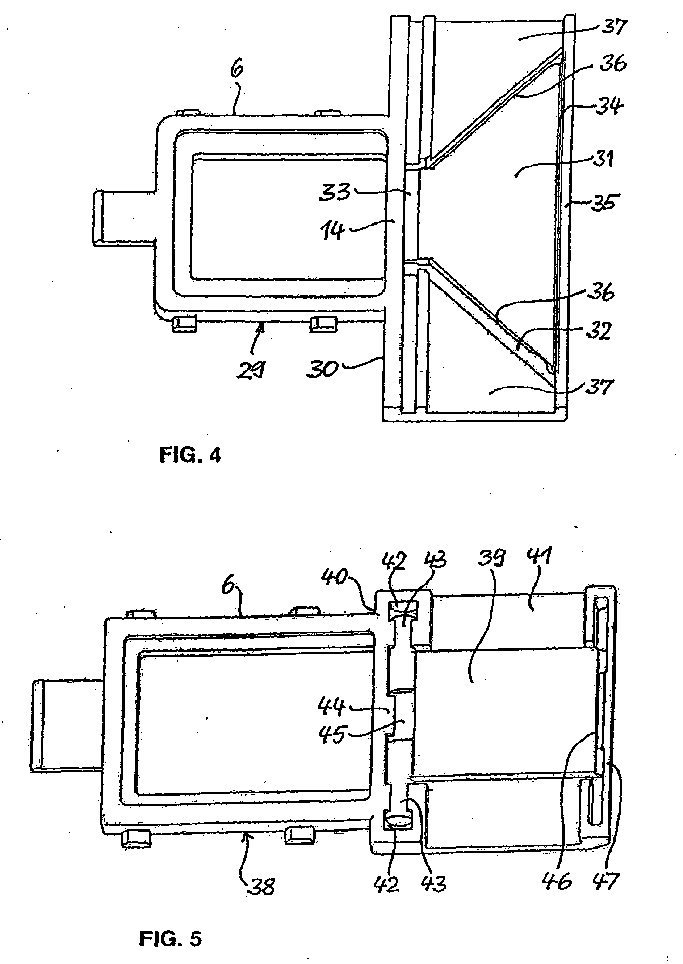

Figur 4 zeigt einen Halter 29, der sich von dem Halter 5 durch eine Abwandlung seines Haltebereichs 30 unterscheidet und der zum Umlenken einer Flachbandleitung geeignet ist. Der Befestigungsbereich des Halters 29 stimmt mit demjenigen des Halters 5 überein. Der Haltebereich 30 hat eine trapezförmige Klappe 31, die über einer trapezförmigen Öffnung 32 angeordnet ist. Die kurze Parallelseite der Klappe 31 ist durch ein Biegescharnier 33 mit dem Rahmenschenkel 14 des Befestigungsbereichs 6 verbunden. Die lange Parallelseite der Klappe 31 ist mit einer Schnappleiste 34 versehen, die in eine Ausnehmung des äußeren Schenkels 35 des Haltebereiches 30 einschnappt, um die Klappe 31 in der in der Zeichnung gezeigten Schließstellung zu halten. Die Seitenkanten 36 der Klappe 31 sind in einem Winkel von 45° zur Längsachse des Schenkels 35 geneigt.

Eine in den Haltebereich 30 eingelegte und von der geschlossenen Klappe 31 festgehaltene Flachbandleitung kann durch Umfalten an einer der Seitenkanten 36 in einem Winkel von 90° umgelenkt werden Wird die Flachbandleitung an beiden Seitenkanten 36 umgefaltet, so ergibt sich eine Umlenkung der Flachbandleitung um 180°. Die auf beiden Seiten der Öffnung 32 befindlichen Schenkel 37 des Haltebereichs 30 dienen der Führung und Abstützung der Flachbandleitung, wenn diese nicht umgelenkt wird. Bei Umlenkung bilden sie aufgrund ihres Überstandes einen seitlichen Schutz für die umgefaltete Kante der Flachbandleitung

Figur 5 zeigt einen Halter 38 mit einer getrennt von dem Halter 38 hergestellten und anschließend mit diesem beweglich verbundenen Klappe 39. Das Basisteil 40 weist hierbei im Haltebereich eine geschlossene, sich unter der Klappe 39 hindurch erstreckende Platte 41 auf, die an ihrer an den Halter 5 angrenzenden, verstärkten Längsseite zwei im Abstand voneinander angeordnete Lagernuten 42 hat. In den Lagernuten 42 sind an einem Ende der Klappe 39 angeordnete, zylindrische Lagerzapfen 43 gelagert. Die Lagerzapfen 43 greifen mit mehr als der Hälfte ihres Umfangs in die Lagernuten 42 ein Die Öffnungsweite der Lagernuten 42 ist kleiner als der Durchmesser der Lagerzapfen, so daß die Lagerzapfen formschlüssig in den Lagernuten 42 gehalten sind. Die Öffnung der Lagernuten 42 ist andererseits ausreichend groß, um unter Ausnutzung der werkstoffbedingten elastischen Verformbarkeit der Lagernuten 42 ein Einknöpfen der Lagerzapfen 43 in dieselben zu ermöglichen.

In der Schließstellung ist die Klappe 39 an ihrer durch die Lagerzapfen 43 gebildeten Schwenkachse zusätzlich durch eine Rippe 44 gegen Lösen gesichert, die sich am Basisteil 40 in der Mitte zwischen den Lagernuten 42 befindet und in eine Ausnehmung 45 auf der Oberseite der Klappe 39 eingreift. Bei vollständig geöffneter Klappe 39 ist der Rand der Ausnehmung 45 so weit von der Rippe 44 entfernt, daß das Einsetzen der Klappe 39 in die Lagernuten 42 durch die Rippe 44 nicht behindert wird.

Wie bei den anderen, bereits beschriebenen Haltern wird auch die Klappe 39 durch einen mit einer Rastnase an ihrem freien Ende zusammenwirkenden Schnappverschluß 46 in der Schließstellung gehalten, der an einem elastisch verformbaren Schenkel 47 des Basisteils 40 ausgebildet ist

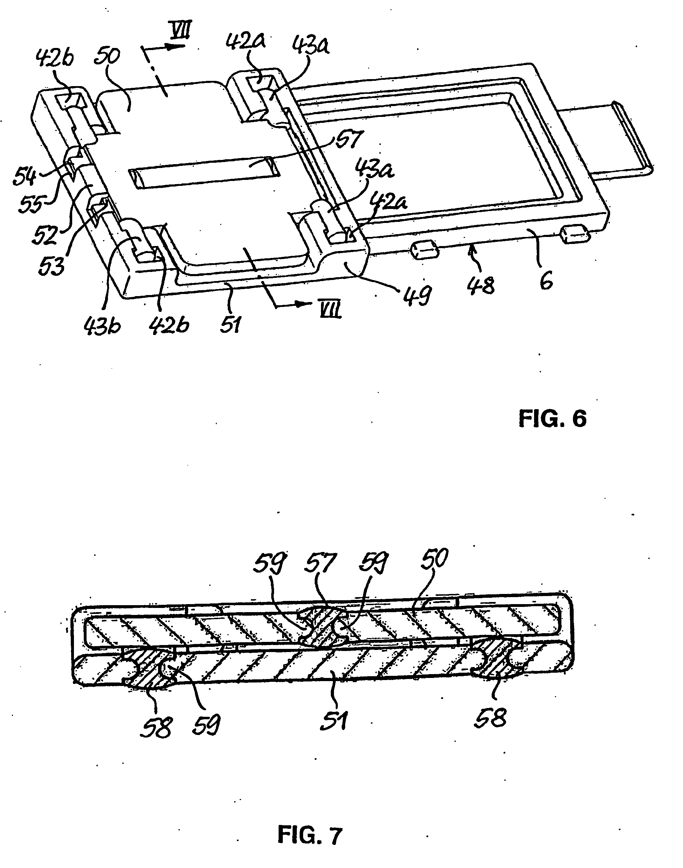

Bei der in den Figuren 6 bis 8 gezeigten Ausgestaltung eines Halters 48 ist die getrennt von dem Basisteil 49 hergestellte Klappe 50 vollkommen symmetrisch ausgebildet Hierdurch wird die Lageausrichtung der Klappe 50 vor der Montage vereinfacht und eine automatische Montage der Klappe 50 erleichtert Wie bei dem Halter gemäß Figur 5 weist die Klappe 50 Lagerzapfen 43a, 43b auf, die in Lagernuten 42a, 42b im Basisteil 49 einknöpfbar sind. Da die Klappe 50 infolge ihrer symmetrischen Gestaltung vier Lagerzapfen hat, ist auch das Basisteil 49 mit vier den Lagerzapfen zugeordneten Lagernuten versehen. Hierbei dienen die den Befestigungsbereich 6 benachbarten Lagernuten 42a und Lagerzapfen 43a der Schwenklagerung der Klappe 50, während die am freien Ende des Haltebereiches 51 befindlichen Lagernuten 42b lediglich zum Festhalten der Lagerzapfen 43b und damit auch der Klappe 50 in der Schließstellung dienen Zusätzlich ist die Klappe 50 in der Schließstellung durch eine federnde Raste 52 gesichert, die an den freien Enden des Haltebereiches 51 angebracht ist und eine Leiste 53 übergreift, die sich längs des Randes der Klappe 50 erstreckt Die Leiste 53 hat zwei Vorsprünge 54, die beiderseits der Raste 52 in Ausnehmungen 55 im Basisteil 49 eingreifen Auf der anderen, als Schwenklager dienenden Seite der Klappe 50 untergreifen die dort in der Zeichnung nicht sichtbaren Vorsprünge 54 einen sich zwischen den Lagernuten 42 erstreckenden Abschnitt 56 des Basisteils 49 und verhindert dadurch, daß sich die Schwenklagerseite der Klappe 50 vom Basisteil 49 lösen kann.

Um die Flachbandleitung mit einer definierten Anpreßkraft im Haltebereich 51 festzuspannen und an einer Verschiebung in Längsrichtung zu hindern, sind, wie insbesondere aus Figur 7 zu ersehen, in der Klappe 50 und in dem von der Klappe 50 überdeckten Basisteil 49 Einsätze 57, 58 aus weichelastischem Material, z.B. Gummi oder TPE angeordnet Die Einsätze 57, 58 erstrecken sich quer zur Längsrichtung der festzuspannenden Flachbandleitung über die gesamte Breite der Anlagefläche der Klappe 50 und des Basisteils 49. Die Einsätze 57, 58 sind in Schlitzen der Klappe 50 bzw des Basisteils 49 angeordnet und ragen auf beiden Seiten der Klappe 50 bzw des Basisteils 49 mit einer leicht gewolbten Oberfläche aus diesen heraus. An ihren in den Schlitzen befindlichen Längsseiten sind die Einsätze 56, 57 genutet und durch in die Nuten eingreifende Federn 59 der Klappe 50 bzw. des Basisteils 49 formschlüssig gehalten An der Klappe 50 befindet sich der Einsatz 57 aus Symmetriegründen in der Mitte Im Basisteil 49 sind zwei Einsätze 58 im gleichen Abstand von der Mitte angeordnet Je nach Dicke der Flachbandleitung werden beim Schließen der Klappe 50 die Einsatze 57, 58 mehr oder weniger stark in die Schlitze hineingedrückt, wobei sie mit einer definierten Kraft auf die Flachbandleitung einwirken und diese reibschlüssig in dem Halter fixieren.

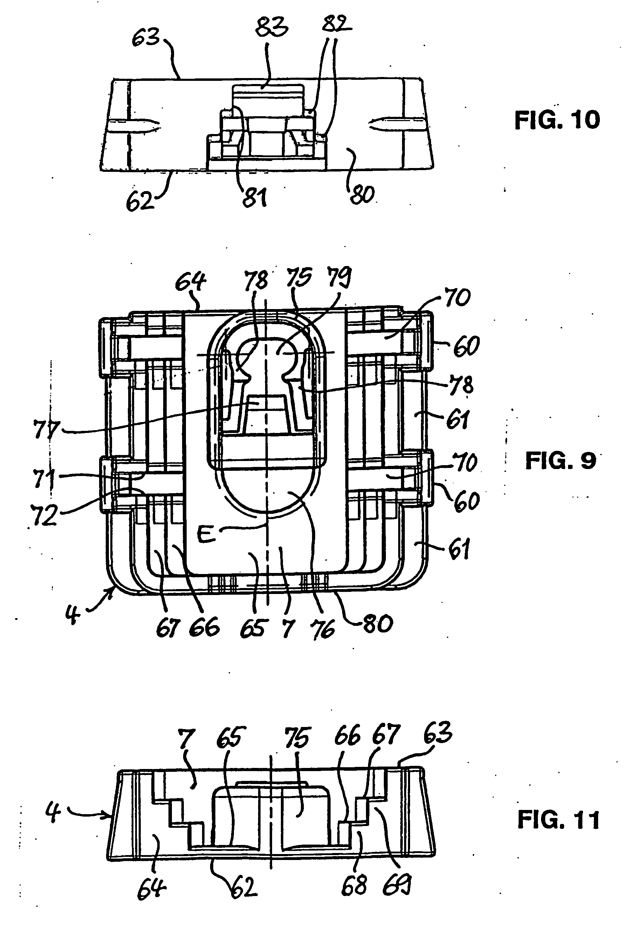

Der Sockel 4 der Befestigungsvorrichtung 1 ist in den Figuren 9 bis 12 dargestellt. Der Sockel 4 hat im wesentlichen die Form eines Quaders und ist zur Längsmittelebene E symmetrisch ausgebildet. An seinen Längsseiten ist der Sockel 4 mit Verstärkungsrippen 60, 61 versehen. Die Verstärkungsrippen 60 sind senkrecht und die Verstärkungsrippen 61 parallel zur Bodenfläche 62 ausgerichtet Im Sockel 4 befindet sich eine Ausnehmung 7, die an der Oberseite 63 und an der vorderen Stirnseite 64 offen ist. Die Ausnehmung 7 hat eine Bodenfläche 65 und in zwei daruberliegenden Ebenen zu dieser parallele Stufenflächen 66, 67, die von seitlichen, die Ausnehmung 7 zur Oberseite 63 hin erweiternden und zur Ebene E parallelen Stufen 68, 69 gebildet sind. Auf der Innenseite der Verstärkungsrippen 60 sind Nuten 70 vorgesehen, die den Sockel 4 im Bereich der Stufen 68, 69 von der Bodenfläche 62 bis zur Oberseite 63 vollständig durchdringen. Die Nuten 70 haben parallele Seitenwände 71, 72. In den Seitenwänden 72 sind nebeneinander quaderförmige Aussparungen ausgebildet, die sich bis zur Bodenfläche 62 erstrecken und jeweils in einem Abstand von den Stufenflächen 66, 67 bzw. von der Oberseite 63 eine zu diesen parallele, etwa auf halber Stufenhöhe liegende Endfläche 74 haben In Figur 11 sind die Endflächen 74 sichtbar. Zwischen den Endflächen 74 und den diesen benachbarten, jeweils tiefer liegenden Stufenflächen 66, 67 bzw. der Bodenfläche 65 sind die Aussparungen 73 zur Ausnehmung 7 hin offen. Anstelle mehrerer nebeneinanderliegender Aussparungen 73 kann in den Seitenwänden 72 auch eine einzige Aussparung mit entsprechend positionierten Endflächen und in die Ausnehmung 7 mündenden Öffnungen vorgesehen sein.

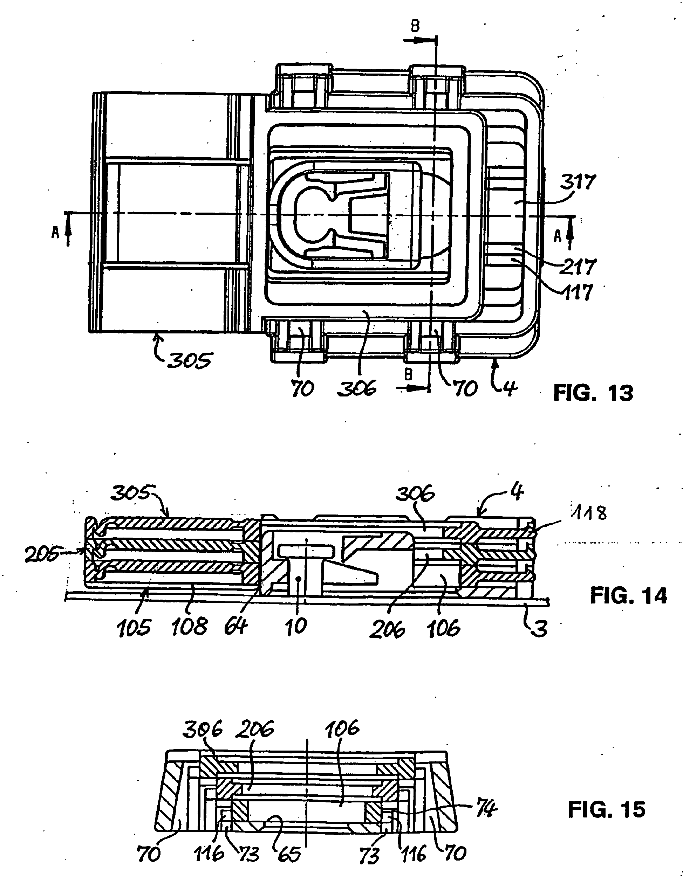

In der Mitte der Ausnehmung 7 befindet sich in einem Abstand von den Stufen 68, 69 eine Wand 75, die eine Befestigungsöffnung 76 im Boden der Ausnehmung 7 teilweise umgibt. Die Wand 75 trägt eine Sperrklinke 77, die sich über der Öffnung befindet. Gegenüber der Sperrklinke 77 sind an dem Rand der Öffnung 76 befestigte Führungsstege 78 angebracht, die eine Befestigungsöffnung 79 zur Aufnahme des T-Bolzens 10 begrenzen, mit dem der Sockel 4 an der Unterlage 3 befestigt ist. Die Sperrklinke 77 weicht beim Aufstecken des Sockels 4 auf den T-Bolzen 10 federnd aus und schnappt in ihre Sperrstellung zuruck, sobald der T-Bolzen 10 in die Befestigungsöffnung 79 eingerastet ist. In ihrer Sperrstellung verriegelt die Sperrklinke 77 den T-Bolzen 10 in der Befestigungsöffnung 79, siehe Figur 13

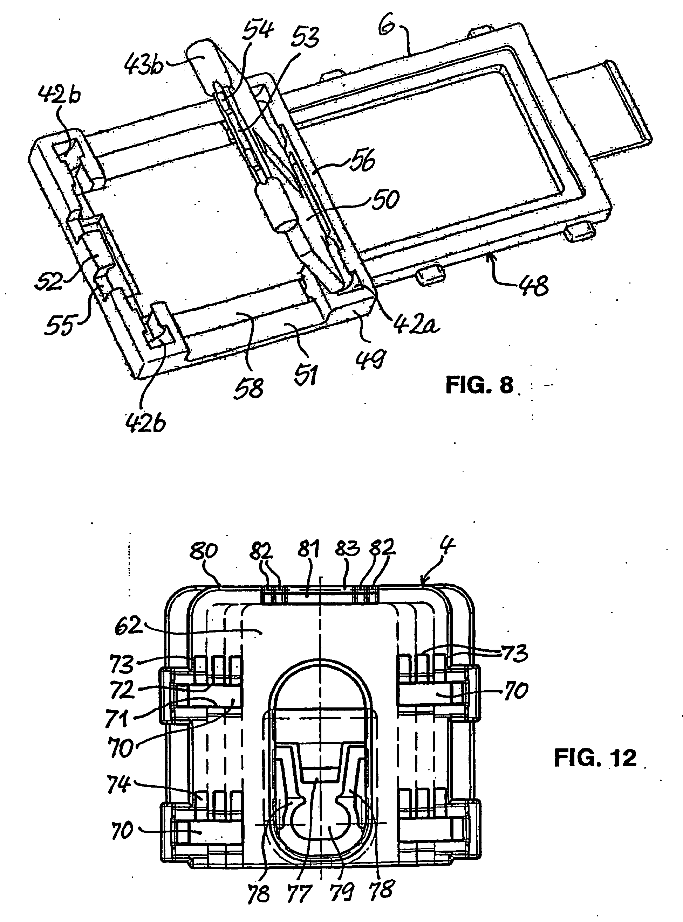

Wie aus den Figuren 9 und 12 zu ersehen, befindet sich in der hinteren Stirnseite 80 des Sockels 4 eine Öffnung 81, deren Breite in zwei Stufen von oben nach unten zunimmt. Jeder Stufenabschnitt ist zur Aufnahme der Zunge eines Halters bestimmt. An den Stufen befinden sich Ausnehmungen 82, in die der am Ende der Zunge angebrachte Schnapphaken einrasten kann. Eine entsprechende Ausnehmung 83 ist am oberen Rand der Öffnung 81 vorgesehen

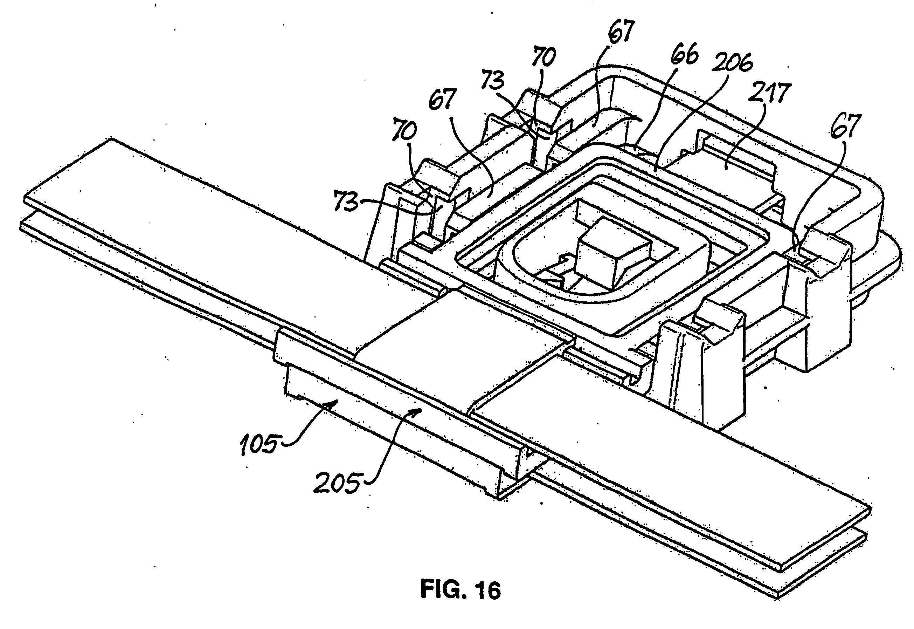

In den Figuren 12 bis 16 ist die Verbindung von mehreren Haltern 105, 205 und 305 mit dem Sockel 4 veranschaulicht Die Halter 105, 205 und 305 sind annähernd baugleich mit dem in den Figuren 2 und 3 gezeigten Halter 5. Sie unterscheiden sich jedoch voneinander hinsichtlich der Breite ihrer Befestigungsbereiche, die an den Abstand der einander gegenuberliegenden Stufen 68, 69 bzw. Breite der oberen Öffnung der Ausnehmung 7 angepaßt sind. Der Befestigungsbereich 106 des Halters 105 hat die geringste Breite und ist für die Anordnung zwischen den Stufen 68 bestimmt Zur Montage wird der Halter 105 mit seinem Befestigungsbereich 106 von oben in die Ausnehmung 7 des Sockels 4 eingelegt, wobei die seitlichen Vorsprünge 116 in die Nuten 70 eingreifen. Bei diesem Vorgang befindet sich der Befestigungsbereich 106 in der Ausnehmung 7 in einer Position, in der das Ende der Zunge 117 innerhalb der Ausnehmung 7 liegt. Sobald der Befestigungsbereich 106 auf der Bodenfläche 65 aufliegt, wird der Halter 105 in Richtung der hinteren Stirnseite 80 des Sockels 4 verschoben. Hierbei gelangen die Vorsprünge 116 in die Aussparungen 73 und die Zunge 117 dringt mit ihrem Schnapphaken 118 in den untersten Abschnitt der Öffnung 81 ein, wobei die Zunge 117 federnd nach unten ausweicht Die Endstellung ist erreicht, wenn der Haltebereich 108, wie in Figur 12 gezeigt, an der vorderen Stirnseite 64 des Sockels 4 anstößt. In dieser Stellung rastet der Schnapphaken 118 in die Ausnehmungen 82 an der Öffnung 81 ein und halt dadurch den Halter 105 in dem Sockel 4 fest. Die Vorsprunge 116 befinden sich in dieser Stellung in den Aussparungen 73 unter deren Endflächen 74 und sichern dadurch den Halter 105 formschlussig gegen Herausheben aus der Ausnehmung 7.

Der Halter 105 kann von dem Sockel 4 gelöst werden, indem durch einen Druck von oben auf die Zunge 117 der Schnapphaken 118 aus den Ausnehmungen 82 herausgedrückt und gleichzeitig der Halter 105 an seinem Haltebereich 108 nach vorne gezogen wird Sobald sich die Vorsprünge 116 wieder in den Nuten 70 befinden, kann der Halter 105 nach oben aus dem Sockel 4 entnommen werden, wenn kein weiterer Halter vorhanden ist.

Die Montage der Halter 205 und 305 erfolgt ebenfalls in der vorstehend beschriebenen Weise, wobei der Halter 205 mit seinem Befestigungsbereich 206 zwischen den Stufen 69 und der Halter 305 mit seinem Befestigungsbereich 306 in der Öffnung der Ausnehmung 7 angeordnet wird. Die Breite der Befestigungsbereiche 206 und 306 ist entsprechend größer, die Breite der Zungen 217, 317 entsprechend kleiner. An den unterschiedlichen Größenverhältnissen der einzelnen Befestigungsbereiche kann der Fachmann daher ohne weiteres erkennen, in welcher Reihenfolge die Halter nacheinander zu montieren sind.

Figur 15 zeigt ein Anwendungsbeispiel, bei dem lediglich zwei Halter 105 und 205 in den Sockel 4 eingesetzt sind. Die Aufnahme für den Halter 305 ist leer. Man kann daher die Stufenflächen 67, auf die der Halter 305 aufgelegt wird, die Nuten 70 und die Aussparungen 73 zur Aufnahme der Vorsprünge 316 gut erkennen

## Patentansprüche

1. Vorrichtung zum Befestigen von langgestreckten, flachen Gegenständen, insbesondere Flachbandleitungen, an einer Unterlage (3) mit einem Halter (5), der einen Haltebereich (8) mit Mitteln zum Festhalten wenigstens eines langgestreckten, flachen Gegenstands und einen Befestigungsbereich (6) aufweist, der zum Befestigen des Halters (5) bestimmt ist, und einem Sockel (4), der getrennt von dem Halter (5) an einer Unterlage (3) befestigbar ist, wobei an dem Sockel (4) und an dem Befestigungsbereich (6) des Halters (5) einander zugeordnete Kupplungselemente vorgesehen sind, die zum Verbinden des Halters (5) mit dem Sockel (4) in eine Eingrifflage gebracht werden können, in welcher der Halter (5) mit Hilfe der Kupplungselemente an dem Sockel (4) festgehalten ist, **dadurch gekennzeichnet, daß** der Sockel (4) eine Ausnehmung (7) zur Aufnahme wenigstens eines Befestigungsbereichs (6) des Halters (5) aufweist und daß der Halter (5) mit seinem Befestigungsbereich (6) auf der der Unterlage (3) abgekehrten Seite des Sockels (4) mit einer zur Unterlage (3) hin gerichteten ersten Bewegung in die Ausnehmung (7) des Sockels (4) einsetzbar und durch eine quer zu dieser ersten Bewegung verlaufende zweite Bewegung in eine Eingriffslage bewegbar ist, in welcher der Halter (5) formschlüssig an dem Sockel (4) befestigt ist.

2. Vorrichtung nach Anspruch 1, **dadurch gekennzeichnet, daß** die Ausnehmung (7) an wenigstens zwei gegenüberliegenden Seiten Kupplungselemente bildende Nuten (70) und/oder Vorsprünge hat und der Befestigungsbereich des Halters (5) mit den Nuten des Sockels zusammenwirkende Vorsprünge (16) und/oder mit den Vorsprüngen des Sockels zusammenwirkende Nuten aufweist.

3. Vorrichtung nach einem der Ansprüche 1 oder 2, **dadurch gekennzeichnet, daß** zueinander parallele Nuten (70) in gegenüberliegenden Seitenwänden der Ausnehmung (7) des Sockels (4) ausgebildet und mit wenigstens einem offenen Ende versehen sind, wobei der Befestigungsbereich (6) des Halters (5) Vorsprünge (16) hat, die in die Nuten (70) eingreifen, wenn der Halter (5) mit dem Sockel (4) verbunden ist.

4. Vorrichtung nach einem der Ansprüche 2 oder 3, **dadurch gekennzeichnet, daß** die Nuten (70) eine seitliche Aussparung (73) haben und die Vorsprünge (16) des Halters in der mit dem Sockel verbundenen Eingriffslage an den seitlichen Aussparungen (73) der Nuten angeordnet und dort abgestützt sind.

5. Vorrichtung nach einem der Ansprüche 2 bis 4, **dadurch gekennzeichnet, daß** zur Verankerung des Befestigungsbereichs (6) des Halters (5) in der Eingriffslage im Sockel (4) ein Schnappgesperre vorgesehen ist, das einschnappt, sobald die Vorsprünge (16) des Halters (5) sich in den Aussparungen (73) des Sockels (4) befinden.

6. Vorrichtung nach einem der vorhergehenden Ansprüche, **dadurch gekennzeichnet, daß** die Ausnehmung (7) des Sockels (4) zwei oder mehr Abschnitte aufweist, die in parallelen Ebenen übereinander liegen und durch eine mehrstufige Ausbildung zweier gegenüberliegender Seitenwände der Ausnehmung (7) voneinander abgesetzt sind, wobei jeder Abschnitt zur Aufnahme eines in seiner Größe dem jeweiligen Abschnitt angepaßten Befestigungsbereichs (106 bzw. 206 bzw. 306) eines Halters (105 bzw. 205 bzw. 305) ausgebildet ist.

7. Vorrichtung nach einem der vorhergehenden Ansprüche, **dadurch gekennzeichnet, daß** der Sockel (4) eine Öffnung (78) zur Aufnahme eines von der Unterlage (3) abstehenden Befestigungsbolzens (10) mit Hinterschnitt und in den Hinterschnitt des Befestigungsbolzens eingreifende Haltemittel hat.

8. Vorrichtung nach einem der vorhergehenden Ansprüche, **dadurch gekennzeichnet, daß** der Sockel (4) an seiner der Unterlage (3) zugewandten Unterseite mit einem in eine Öffnung der Unterlage einsteckbaren Zapfen mit die Öffnung hintergreifenden Haltemitteln versehen ist.

9. Vorrichtung nach einem der vorhergehenden Ansprüche, **dadurch gekennzeichnet, daß** der Halter (5) ein im wesentlichen plattenförmiges Basisteil (11) aufweist, das in nebeneinander liegender Anordnung den Haltebereich (8) und den Befestigungsbereich (6) bildet, wobei der Haltebereich (8) eine Auflagefläche (21) für einen langgestreckten, flachen Gegenstand, an den Rändern der Auflagefläche in Bezug auf die Anlagefläche erhabene Führungselemente (27, 28) und eine an dem Basisteil (11) schwenkbar befestigte Klappe (24) aufweist, die in einer an dem Basisteil (11) festhaltbaren Verriegelungsstellung den auf der Anlagefläche (21) angeordneten Gegenstand übergreift.

10. Vorrichtung nach einem der vorhergehenden Ansprüche, **dadurch gekennzeichnet, daß** der Befestigungsbereich (6) des Halters (5) an seinen gegenüberliegenden, an den Haltebereich (8) angrenzenden Seiten zwei in einem Abstand voneinander angeordnete Vorsprünge (16) aufweist, die zum Eingreifen in Nuten (70) des Sockels (4) bestimmt sind.

11. Vorrichtung nach einem der Ansprüche 9 oder 10, **dadurch gekennzeichnet, daß** der Halter (5) an seinem dem Haltebereich (8) entgegengesetzten Ende eine von dem Basisteil (11) abstehende, federnde Zunge (17) hat, die an ihrem freien Ende einen mit dem Sockel (4) zusammenwirkenden Rasthaken (18) trägt.

12. Vorrichtung nach einem der vorhergehenden Ansprüche, **dadurch gekennzeichnet, daß** der Befestigungsbereich (6) des Halters (5) eine zentrale Öffnung (12) hat.

13. Vorrichtung nach einem der Ansprüche 9 bis 12, **dadurch gekennzeichnet, daß** die Klappe (24) mit dem Halter (5) durch ein Biegescharnier (25) verbunden ist.

14. Vorrichtung nach einem der Ansprüche 9 bis 13, **dadurch gekennzeichnet, daß** die Klappe (39) zylindrische Lagerzapfen (43) aufweist, die in eine teilzylindrische Lagerausnehmung (42) in dem Halter (38) einknöpfbar sind.

15. Vorrichtung nach einem der Ansprüche 9 bis 14, **dadurch gekennzeichnet, daß** an dem Halter (105) oder an der Klappe (305) ein Schnapphaken angebracht ist, der mit einem Vorsprung an der Klappe beziehungsweise an dem Halter zusammenwirkt.

16. Vorrichtung nach einem der Ansprüche 9 bis 15, **dadurch gekennzeichnet, daß** die Klappe (50) an der Scharnierseite Vorsprünge (54) hat, die in der Schließstellung der Klappe (50) in eine Ausnehmung des Halters (48) eingreifen und die Klappe (50) an dem Scharnier zusätzlich gegen Lösen sichern.

17. Vorrichtung nach einem der Ansprüche 9 bis 16, **dadurch gekennzeichnet, daß** an der Klappe (50) und/oder in der Anlagefläche des Halters (48) eine erhabene Rippe aus einem weichelastischen Material vorgesehen ist.

18. Vorrichtung nach Anspruch 17, **dadurch gekennzeichnet, daß** die Rippe aus einem Einsatz (57, 58) besteht, der in einen Schlitz des Halters (48) beziehungsweise der Klappe (50) eingesetzt ist.

19. Vorrichtung nach einem der Ansprüche 17 oder 18, **dadurch gekennzeichnet, daß** die Rippe im Zweikomponenten-Spritzgießverfahren gemeinsam mit dem Halter (48) beziehungsweise mit der Klappe (50) hergestellt wird.

20. Vorrichtung nach einem der Ansprüche 9 bis 19, **dadurch gekennzeichnet, daß** die Klappe (50) eine seitliche Umlenkkante aufweist, die in einem dem Umlenkwinkel entsprechenden Winkel zur Längsrichtung der Flachbandleitung verläuft.

21. Vorrichtung nach einem der Ansprüche 9 bis 20, **dadurch gekennzeichnet, daß** die Klappe (50) vollkommen symmetrisch ist.

## Claims

1. Device for fastening elongated, flat objects, in particular flat conductor strips, to a substrate (3), with a holder (5) comprising a holding portion (8) having means for securing at least one elongated, flat object, and a fastening portion (6) intended for fastening the holder (5), and a pedestal (4) fastenable separate from the holder (5) to a substrate (3), coupling elements related to each other being provided on the pedestal (4) and on the fastening portion (6) of the holder (5), which elements, to connect the holder (5) to the pedestal (4), can be brought into a position of engagement in which the holder (5) is held fast to the pedestal (4) with the aid of the coupling elements **characterized in that** the pedestal (4) comprises a recess (7) to accommodate at least one fastening portion (6) of th holder (5), and that the holder (5) is insertable with its fastening portion (6) on the side of the pedestal (4) away from the substrate (3) in the recess (7) of the pedestal (4) by a first motion directed towards the substrate (3), and movable by a second motion extending transverse to said first motion into a position of engagement in which the holder is positively fixed to the pedestal (4).

2. Device according to claim 1, **characterized in that**, on at least two opposed sides, the recess (7) has grooves (70) and/or projections forming coupling elements, and the fastening portion of the holder (5) comprises projections (16) cooperating with the grooves of the pedestal and/or grooves cooperating with the projections of the pedestal.

3. Device according to claims 1 and 2, **characterized in that** grooves (70) parallel to each other are configured in opposed side walls of the recess (7) of the pedestal (4) and provided with at least one open end, the fastening portion (6) of the holder (5) having projections (16) engaging the grooves (70) when the holder (5) is connected to the pedestal (4).

4. Device according to any one of claims 2 or 3, **characterized in that** the grooves (70) have a lateral cutout (73) and the projections (16) of the holder, in the position of engagement connected with the pedestal, are arranged at the lateral cutouts (73) of the grooves and there supported.

5. Device according to claims 2 to 4, **characterized in that**, to anchor the fastening portion (6) of the holder (5) in the position of engagement in the pedestal (4), a snap lock is provided, that snaps to as soon as the projections (16) of the holder (5) are located in the cutouts (73) of the pedestal (4).

6. Device according to any one of the preceding claims, **characterized in that** the recess (7) of the pedestal (4) comprises two or more segments lying in parallel planes one above another and offset from each other by a multi-step configuration of two opposed side walls of the recess (7), each segment being configured to accommodate a fastening portion (106, or 206, or 306), adapted in size to the respective segment, of a holder (105, or 205, or 305).

7. Device according to any one of the preceding claims, **characterized in that** the pedestal (4) has an opening (78) to accommodate a fastening pin (10) projecting from the substrate (3) with an undercut and holding means engaging the undercut of the fastening pin.

8. Device according to any one of the preceding claims, **characterized in that** the pedestal (4) on its under side towards the substrate (3) is provided with a pin insertable in an opening of the substrate with holding means undergrasping the opening.

9. Device according to any one of the preceding claims, **characterized in that** the holder (5) comprises an essentially plate-shaped base part (11) forming the holding portion (8) and the fastening portion (6) arranged to lie side by side, the holding portion (8) comprising a bearing surface (21) for an elongated, flat object, at the edges of the bearing surface, guide elements (27, 28) elevated in relation to the bearing surface, and a flap (24) swingably attached to the base part (11) and, in a locking position capable of being held fast on the base part (11), overgrasping the object arranged on the contact surface (21).

10. Device according to any one of the preceding claims, **characterized in that** the fastening portion (6) of the holder (5), on its opposed sides adjacent to the holding portion (8), comprises two projections (16) arranged at a distance from each other and intended to engage grooves (70) of the pedestal (4).

11. Device according to any one of claims 9 or 10, **characterized in that** the holder (5) at its end opposed to the holding portion (8) has a spring tongue (17) projecting from the base part (11) and bearing a catch hook (18) cooperating with the pedestal (4) at its free end.

12. Device according to any one of the preceding claims, **characterized in that** the fastening portion (6) of the holder (5) has a central opening (12).

13. Device according to claims 9 to 12, **characterized in that** the flap (24) is connected to the holder (5) by a flexure hinge (25).

14. Device according to claims 9 to 13, **characterized in that** the flap (39) comprises cylindrical bearing pins (43) capable of buttoning into a partially cylindrical bearing recess (42) in the holder (38).

15. Device according to claims 9 to 14, **characterized in that** on the holder (105) or on the flap (305), a snap hook is attached, cooperating respectively with a projection on the flap or on the holder.

16. Device according to claims 9 to 15, **characterized in that** the flap (50) has projections (54) on the hinge side that, in closed position of the flap (50), engage a recess of the holder (48) and secure the flap (50) additionally at the hinge against coming loose.

17. Device according to claims 9 to 16, **characterized in that**, on the flap (50) and/or in the contact surface of the holder (48) a convex rib of a soft elastic material is provided.

18. Device according to claim 17, **characterized in that** the rib consists of an insert (57, 58) inserted in a slot of the holder (48) or of the flap (50) as the case may be.

19. Device according to any one of claims 17 or 18, **characterized in that** the rib is produced by the two-component injection molding process jointly with the holder (48) or with the flap (50) as the case may be.

20. Device according to claims 9 to 19, **characterized in that** the flap (50) comprises a lateral turn edge extending at an angle to the lengthwise direction of the flat conductor strip corresponding to the angle of the turn.

21. Device according to claims 9 to 20, **characterized in that** the flap (50) is completely symmetrical.

## Revendications

1. Dispositif pour fixer des objets plats allongés, en particulier des câbles plats, sur une console (3), avec un support (5), qui présente une zone de maintien (8) avec des moyens pour retenir au moins un objet plat allongé et une zone de fixation (6), qui est destinée à la fixation du support (5), et un socle (4), qui peut être fixé séparément du support (5) sur une console (3), dans lequel il est prévu des éléments de couplage affectés l'un à l'autre sur le socle (4) et sur la zone de fixation (6) du support (5), qui peuvent être amenés pour raccorder le support (5) au socle (4) en position d'engagement, dans laquelle le support (5) est retenu sur le socle (4) à l'aide des éléments de couplage, **caractérisé en ce que** le socle (4) présente un creux (7) pour recevoir au moins une zone de fixation (6) du support (5) et **en ce que** le support (5), avec sa zone de fixation (6) sur le côté du socle (4) opposé à la console (3), peut être inséré avec un premier mouvement dirigé vers la console (3) dans le creux (7) du socle (4) et peut être déplacé par le biais d'un second mouvement s'étendant transversalement à ce premier mouvement en position d'engagement, dans laquelle le support (5) est fixé au socle (4) par adaptation de forme.

2. Dispositif selon la revendication 1, **caractérisé en ce que** le creux (7) a des rainures (70) et/ou des saillies formant des éléments de couplage sur au moins deux côtés opposés et la zone de fixation du support (5) présente des saillies (16) coopérant avec les rainures du socle et/ou des rainures coopérant avec les saillies du socle.

3. Dispositif selon l'une quelconque des revendications 1 ou 2, **caractérisé en ce que** des rainures (70) parallèles l'une à l'autre sont ménagées dans des parois latérales opposées du creux (7) du socle (4) et sont pourvues d'au moins une extrémité ouverte, dans lequel la zone de fixation (6) du support (5) présente des saillies (16) qui s'engagent dans les rainures (70), lorsque le support (5) est raccordé au socle (4).

4. Dispositif selon l'une quelconque des revendications 2 ou 3, **caractérisé en ce que** les rainures (70) ont un évidement latéral (73) et **en ce que** les saillies (16) du support sont aménagées en position d'engagement raccordée au socle sur les évidements latéraux (73) des rainures et y sont soutenues.

5. Dispositif selon l'une quelconque des revendications 2 à 4, **caractérisé en ce que**, pour ancrer la zone de fixation (6) du support (5) en position d'engagement dans le socle (4), on prévoit un dispositif d'encliquetage, qui s'enclenche dès que les saillies (16) du support (5) se trouvent dans les évidements (73) du socle (4).

6. Dispositif selon l'une quelconque des revendications précédentes, **caractérisé en ce que** le creux (7) du socle (4) présente deux sections ou plus, qui se superposent dans des plans parallèles et sont décalées l'une par rapport à l'autre par une formation à plusieurs étages de deux parois latérales opposées du creux (7), dans lequel chaque section est aménagée pour recevoir une zone de fixation (106, 206 ou 306), de taille adaptée à la section respective, d'un support (105, 205 ou 305).

7. Dispositif selon l'une quelconque des revendications précédentes, **caractérisé en ce que** le socle (4) présente une ouverture (78) destinée à recevoir un boulon de fixation (10) s'écartant de la console (3) et ayant une contre-dépouille et des moyens de retenue s'engageant dans la contre-dépouille du boulon de fixation.

8. Dispositif selon l'une quelconque des revendications précédentes, **caractérisé en ce que** le socle (4) est pourvu, sur sa face inférieure tournée vers la console (3), d'un tourillon enfichable dans une ouverture de la console avec les moyens de retenue s'engageant derrière l'ouverture.

9. Dispositif selon l'une quelconque des revendications précédentes, **caractérisé en ce que** le support (5) présente une partie de base (11) sensiblement en forme de plaque, qui forme, dans un aménagement mutuellement adjacent, la zone de retenue (8) et la zone de fixation (6), laquelle zone de retenue (8) présente une surface d'appui (21) pour un objet plat allongé, des éléments de guidage (27, 28) en relief sur les bords de la surface d'appui par rapport à la surface d'appui et un volet (24) fixé à pivotement sur la partie de base (11) qui, en position de verrouillage pouvant être maintenue sur la partie de base (11), recouvre l'objet disposé sur la surface d'appui (21).

10. Dispositif selon l'une quelconque des revendications précédentes, **caractérisé en ce que** la zone de fixation (6) du support (5) présente, sur ses côtés opposés adjacents à la zone de retenue (8), deux saillies (16) aménagées à distance l'une de l'autre, qui sont destinées à s'engager dans des rainures (70) du socle (4).

11. Dispositif selon l'une quelconque des revendications 9 ou 10, **caractérisé en ce que** le support (5) présente, à son extrémité opposée à la zone de retenue (8), une languette élastique (17) s'écartant de la partie de base (11) et portant à son extrémité libre un crochet d'arrêt (18) coopérant avec le socle (4).

12. Dispositif selon l'une quelconque des revendications précédentes, **caractérisé en ce que** la zone de fixation (6) du support (5) a une ouverture centrale (12).

13. Dispositif selon l'une quelconque des revendications 9 à 12, **caractérisé en ce que** le volet (24) est raccordé au support (5) par le biais d'une charnière de flexion (25).

14. Dispositif selon l'une quelconque des revendications 9 à 13, **caractérisé en ce que** le volet (39) présente des tourillons cylindriques (43) qui peuvent être insérés dans un creux de palier (42) partiellement cylindrique dans le support (3 8).

15. Dispositif selon l'une quelconque des revendications 9 à 14, **caractérisé en ce que** l'on monte sur le support (105) ou sur le volet (305) un crochet d'encliquetage qui coopère avec une saillie sur le volet ou sur le support.

16. Dispositif selon l'une quelconque des revendications 9 à 15, **caractérisé en ce que** le volet (50) présente, côté charnière, des saillies (54) qui s'engagent, en position de fermeture du volet (50), dans un creux du support (48) et qui assurent en plus le volet (50) sur la charnière contre un détachement.

17. Dispositif selon l'une quelconque des revendications 9 à 16, **caractérisé en ce qu'**il est prévu, sur le volet (50) et/ou dans la surface d'appui du support (48), une nervure en relief constituée d'un matériau élastique souple.

18. Dispositif selon la revendication 17, **caractérisé en ce que** la nervure est constituée d'une pièce rapportée (57, 58), qui est insérée dans une fente du support (48) ou du volet (50).

19. Dispositif selon l'une quelconque des revendications 17 ou 18, **caractérisé en ce que** la nervure est élaborée par un procédé de moulage par injection à deux composants, conjointement avec le support (48) ou le volet (50).

20. Dispositif selon l'une quelconque des revendications 9 à 19, **caractérisé en ce que** le volet (50) présente une arête de déviation latérale qui s'étend selon un angle correspondant à l'angle de déviation par rapport à la direction longitudinale du câble plat.

21. Dispositif selon l'une quelconque des revendications 9 à 20, **caractérisé en ce que** le volet (50) est complètement symétrique.
